# EUROPEAN PATENT APPLICATION

(11) **EP 4 506 480 A1**
(43) Date of publication of application: **12.02.2025**
(21) Application number: 24761484.5
(22) Date of filing: 19.03.2024
(51) Int. Cl.: C22C 21/02, C22C 21/08, C22C 1/02, C22F 1/043, C22F 1/047, C22F 1/05, B21B 1/22, B21B 1/46, B21B 37/74

(54) **6XXX ALUMINUM ALLOY SHEET CAPABLE OF REDUCING WELD LIQUEFACTION CRACKS, AND PREPARATION METHOD THEREFOR AND APPLICATION THEREOF**

(30) Priority: 16.06.2023 CN 202310723587
(71) Applicant: Chinalco Materials Application Research Institute Co., Ltd, Changping District Beijing 100044 (CN); Chinalco Ruimin Co., Ltd., Mawei District Fuzhou, Fujian 350015 (CN)
(72) Inventor: REN, Simeng, Beijing 100044 (CN); XU, Zhiqiang, Beijing 100044 (CN); LI, Yingdong, Beijing 100044 (CN); DING, Liqun, Beijing 100044 (CN); ZHAO, Jingwei, Beijing 100044 (CN); WU, Jianxin, Beijing 100044 (CN); LIU, Zhenshan, Beijing 100044 (CN); ZHAO, Pizhi, Beijing 100044 (CN); HUANG, Ruiyin, Beijing 100044 (CN); WANG, Guojun, Beijing 100044 (CN); WANG, Qingbo, Beijing 100044 (CN)
(74) Representative: Casalonga
(86) International application number: PCT/CN2024/082522
(87) International publication number: WO 2024/255369

(57) **Abstract**

The present disclosure provides a 6XXX aluminum alloy sheet capable of reducing liquefying cracks in weld seams, a preparation method and application thereof. The aluminum alloy sheet is composed of the following components: 0.4-0.8% of Si, 0.1-0.35% of Fe, 0.08-0.2% of Mn, 0.45-0.9% of Mg, and ≤ 0.2% of Cu, with the total weight percentage of Mn and Cu being ≤ 0.2%, and the balance being Al and inevitable impurities. The preparation method includes subjecting raw materials to melting and casting, homogenization treatment, hot rough rolling, hot finish rolling, and cold rolling sequentially, to obtain a cold rolled sheet, then carrying out heat preservation at 550-560 °C for 20-30 seconds, followed by heat preservation at 60-70°C for 20-28 hours. In the present disclosure, the 6XXX aluminum alloy sheet prepared by controlling a specific proportion of aluminum alloy elements and combining with a specific solution and aging treatment process has good weldability, which can effectively reduce the liquefying cracks in weld seam overlap joints, improve the strength of weld seam and enhance the mechanical properties of joints.

## Description

### Cross-Reference to Related Application

The present disclosure claims priority to Chinese Patent Application No. 202310723587.8 filed on June 16, 2023, the disclosure of which is hereby incorporated by reference in its entirety.

### Technical Field

The present disclosure relates to the technical field of aluminum alloys, and specifically relates to a 6XXX aluminum alloy sheet capable of reducing liquefying cracks in weld seams, a preparation method and application thereof.

### Background

6XXX series aluminum alloy is an aluminum alloy that can be strengthened by heat treatment and has moderate strength, good formability, and excellent corrosion resistance. It has been widely used in the fields of automobiles and rail transit such as parts of car doors and roofs, etc., and is the preferred aluminum alloy material for achieving lightweight. 6XXX aluminum alloy is generally improved in material properties through the "solution-aging" process. Methods such as riveting, resistance spot welding, and arc welding, etc., can be used for the connection of this series of materials. Among them, arc welding has the characteristics of low cost and high degree of automation, and is currently widely used in the fields of automobiles and rail transit, etc.

The 6XXX series aluminum alloy has weldability and is commonly used as an exterior panel for automobiles. It is usually assembled and welded in the form of arc overlap welding. However, due to the components and process characteristics of the alloy itself, this material has certain sensitivity to welding cracks. It is prone to local melting along grain boundaries in the metal outside the fusion line of the weld seams under the action of welding heat, as well as cracking of the liquefied layer along grain boundaries during the subsequent cooling shrinkage, resulting in liquefying cracks in the overlap joint of the weld seams. Welding crack is a serious defect in weldments, which can seriously affect the performance of aluminum alloy weldments. To ensure the quality of joints of weld seams, higher requirements are placed on the composition, processing technology, and welding process of aluminum alloy materials.

### Summary

The main object of the present disclosure is to provide a 6XXX aluminum alloy sheet capable of reducing liquefying cracks in weld seams, a preparation method and application thereof, so as to solve the problem in the prior art that liquefying cracks in weld seams are easily formed after the 6XXX aluminum alloy sheet is welded.

In order to achieve the above object, according to an aspect of the present disclosure, a preparation method of a 6XXX aluminum alloy sheet capable of reducing liquefying cracks in weld seams is provided. The aluminum alloy sheet is composed of the following components in terms of weight percentage: 0.4-0.8% of Si, 0.1-0.35% of Fe, 0.08-0.2% of Mn, 0.45-0.9% of Mg, and ≤ 0.2% of Cu, with the total weight percentage of Mn and Cu being ≤ 0.2%, and the balance being Al and inevitable impurities, each of the inevitable impurities being <0.05%, and the total impurities being <0.15%; and the preparation method comprises the following steps; step S1, subjecting raw materials of the 6XXX aluminum alloy sheet to melting and casting, to obtain an ingot casting; step S2, subjecting the ingot casting to homogenization treatment, to obtain a homogenized ingot casting; step S3, subjecting the homogenized ingot casting to hot rough rolling so as to obtain a hot rough rolled sheet, and then subjecting the hot rough rolled sheet to hot finish rolling so as to obtain a hot rolled sheet; step S4, subjecting the hot rolled sheet to cold rolling, to obtain a cold rolled sheet; step S5, carrying out heat preservation on the cold rolled sheet at 550-560 °C for 20-30 seconds for the solution treatment, to obtain a solutionized sheet; and step S6, carrying out heat preservation on the solutionized sheet at 60-70 °C for 20-28 hours for the aging treatment, to obtain the 6XXX aluminum alloy sheet.

Further, the aluminum alloy is composed of the following components in terms of weight percentage: 0.7-0.8% of Si, 0.1-0.2% of Fe, 0.08-0.15% of Mn, 0.6-0.7% of Mg, and ≤ 0.1% of Cu, with the total weight percentage of Mn and Cu being ≤ 0.2%, and the balance being Al and inevitable impurities, each of the inevitable impurities being <0.05%, and the total impurities being <0.15%.

Further, in the step S1, the thickness of the ingot casting is 530 mm to 540 mm.

Further, in the step S2, the heat preservation temperature of the homogenization treatment is 540-560 °C, and the heat preservation time is 8-10 hours.

Further, in the step S3, the initial rolling temperature of the hot rough rolling is 520-535 °C; and/or the reduction in pass of the hot rough rolling is 20-30 mm; and/or the thickness of the hot rough rolled sheet is 24-28 mm.

Further, in the step S3, the initial rolling temperature of the hot finish rolling is 510-520 °C; and/or the final rolling temperature of the hot finish rolling is 260-270 °C; and/or the reduction in pass of the hot finish rolling is 5-6 mm; and/or the thickness of the hot rolled sheet is 4-8 mm.

Further, in the step S4, the reduction in pass of the cold rolling is 1-2 mm; and/or the thickness of the cold rolled sheet is 1.0-1.5 mm.

According to another aspect of the present disclosure, a 6XXX aluminum alloy sheet capable of reducing liquefying cracks in weld seams is provided, which is obtained by the above mentioned preparation method of the present disclosure.

According to another aspect of the present disclosure, a welding method for an aluminum alloy is provided, wherein the above mentioned 6XXX aluminum alloy sheet of the present disclosure is used as a base material and subjected to CMT+P welding with an ER5356 welding wire.

According to another aspect of the present disclosure, a welded joint is provided, which is obtained by the above mentioned welding method of the present disclosure, and the welded joint has no liquefying cracks.

By means of the technical solution of the present disclosure, only several simple additive elements are used, and by controlling a specific proportion of aluminum alloy elements, especially by controlling the total weight of Mn and Cu within a lower range, the 6XXX aluminum alloy sheet is improved in the direction of reducing liquefying cracks in weld seams. At the same time, by combining with a specific "solution-aging" treatment process, the eutectic phase of aluminum alloy can be completely redissolved in the sheet, while eliminating the lath-shaped grain structure grown during the rolling of the original sheet, thereby effectively inhibiting the precipitation of the low melting point MgSi(MgSiCu) eutectic phase, etc., between grain boundaries, when used for welding, the tendency of liquefying cracks generated in the joint partial melting zone under the input of welding heat can be greatly reduced. The 6XXX aluminum alloy sheet of the present disclosure contains no rare noble metals, has a relatively low cost and a simple preparation method, and can be processed and produced on conventional production lines. The produced 6XXX aluminum alloy sheet has good weldability, which can effectively reduce liquefying cracks in the overlap joint of the weld seams, improve the strength of weld seam, and enhance the mechanical properties of joints, laying a foundation for the subsequent promotion and application of the material.

### Brief Description of the Drawings

The drawings attached to the specification forming a part of this application are used to provide further understanding of the present disclosure, and exemplary embodiments and descriptions thereof of the present disclosure are used to explain the present disclosure rather than to constitute improper limitations of the present disclosure. In the drawings:
FIG. 1 shows a schematic diagram of the tensile specimen size of a sample according to Example 1 of the present disclosure;
FIG. 2 shows the macroscopic morphology diagram of the weld seams according to Comparative examples 1 to 3 and Examples 1 to 2 of the present disclosure;
FIG. 3 shows the microstructure diagram and component analysis diagram of the partial melting zone of the weld seams according to Comparative example 1; and
FIG. 4 shows the load-displacement graph of the weld seams according to Comparative examples 1 to 3 and Examples 1 to 2 of the present disclosure.

### Detailed Description of the Embodiments

It should be noted that the embodiments in this application and features in the embodiments may be combined with each other without conflict. The present disclosure is described in detail below by referring to the attached drawings and combining with the embodiments.

### Explanation of Terms:

CMT+P welding: Cold metal transfer + pulse, cold metal transition welding + pulse welding.

As described in the background of the present disclosure, the prior art has the problem that liquefying cracks in weld seams are easily formed after the 6XXX aluminum alloy sheet is welded. In order to solve the above problem, in a typical embodiment of the present disclosure, a preparation method of a 6XXX aluminum alloy sheet capable of reducing liquefying cracks in weld seams is provided. The aluminum alloy sheet is composed of the following components in terms of weight percentage: 0.4-0.8% of Si, 0.1-0.35% of Fe, 0.08-0.2% of Mn, 0.45-0.9% of Mg, and ≤ 0.2% of Cu, with the total weight percentage of Mn and Cu being ≤ 0.2%, and the balance being Al and inevitable impurities, each of the inevitable impurities being <0.05%, and the total impurities being <0.15%; and the preparation method comprises the following steps; step S1, subjecting raw materials of the 6XXX aluminum alloy sheet to melting and casting, to obtain an ingot casting; step S2, subjecting the ingot casting to homogenization treatment, to obtain a homogenized ingot casting; step S3, subjecting the homogenized ingot casting to hot rough rolling so as to obtain a hot rough rolled sheet, and then subjecting the hot rough rolled sheet to hot finish rolling so as to obtain a hot rolled sheet; step S4, subjecting the hot rolled sheet to cold rolling, to obtain a cold rolled sheet; step S5, carrying out heat preservation on the cold rolled sheet at 550-560 °C for 20-30 seconds for the solution treatment, to obtain a solutionized sheet; and step S6, carrying out heat preservation on the solutionized sheet at 60-70 °C for 20-28 hours for the aging treatment, to obtain the 6XXX aluminum alloy sheet. Wherein, the inevitable impurities include but are not limited to Ni, Cr, Zr, and Ti, etc.

In the present disclosure, the raw materials of 6XXX aluminum alloy sheet are firstly melted and casted at 720-740 °C to achieve the introduction of various addition elements, so that an ingot casting is obtained, the specific operation of this step can be understood by those skilled in the art on the basis of the present disclosure, and will not be repeated here. Secondly, the ingot casting is subjected to homogenization treatment to achieve uniform distribution of elements and grains in the microstructure of the ingot casting, after the homogenized ingot casting is obtained, it is subjected to hot rough rolling and hot finish rolling sequentially, so that hot rolled sheet with uniform structure and suitable thickness is gradually obtained through the two different hot rolling methods, which is then subjected to cold rolling to achieve further precise controlling of the deformation process. Then, the obtained cold rolled sheet is subjected to heat preservation at 550-560 °C for 20-30 seconds, then cooled to room temperature, and finally subjected to heat preservation at 60-70 °C for 20-28 hours for the solution-aging treatment, so that the eutectic phase of aluminum alloy can be completely redissolved in the sheet, while eliminating the lath-shaped grain structure grown during the rolling of the original sheet, thereby effectively inhibiting the precipitation of the low melting point MgSi(MgSiCu) eutectic phase, etc., between grain boundaries, when used for welding, the tendency of liquefying cracks generated in the joint partial melting zone under the input of welding heat can be greatly reduced, and finally the 6XXX aluminum alloy sheet capable of reducing liquefying cracks in weld seams of the present disclosure is obtained.

In the present disclosure, only several simple additive elements are used, and by controlling a specific proportion of aluminum alloy elements, especially by controlling the total weight of Mn and Cu within a lower range, the 6XXX aluminum alloy sheet is improved in the direction of reducing liquefying cracks in weld seams. At the same time, by combining with specific preparation processes, the 6XXX aluminum alloy sheet can be processed and produced on conventional production lines, the produced 6XXX aluminum alloy sheet has good weldability, especially when it is used to prepare welded joints with ER5356 welding wire by using the CMT+P welding technology, it can effectively reduce liquefying cracks in the overlap joint of the weld seams, improve the strength of weld seam, and enhance the mechanical properties of joints.

In a preferred embodiment, the aluminum alloy is composed of the following components in terms of weight percentage: 0.7-0.8% of Si, 0.1-0.2% of Fe, 0.08-0.15% of Mn, 0.6-0.7% of Mg, and ≤ 0.1% of Cu, with the total weight percentage of Mn and Cu being ≤ 0.2%, and the balance being Al and inevitable impurities, each of the inevitable impurities being <0.05%, and the total impurities being <0.15%. The strength of weld seam of the 6XXX series aluminum alloy with the above composition is better, and the tendency of liquefying cracks is lower.

In order to further increase the fit degree between the above mentioned aluminum alloy of the present disclosure and the conventional production line, so as to further facilitate the preparation of the aluminum alloy sheet of the present disclosure, in a preferred embodiment, in the step S1, the thickness of the ingot casting is 530 mm to 540 mm.

The homogenization treatment can dissolve the non-equilibrium low melting point eutectic structure, promoting the uniform distribution of elements. In a preferred embodiment, in the step S2, the heat preservation temperature of the homogenization treatment is 540-560 °C, and the heat preservation time is 8-10 hours. The above mentioned homogenization process can further evenly disperse and precipitate the element particles, which is conducive to controlling the grain structure in the subsequent rolling process, thereby further improving the strength of the aluminum alloy, making the strength of the weld seams obtained after welding higher, which can further reduce the tendency of liquefying cracks in weld seams.

The hot rough rolling can use a relatively high initial rolling temperature and a relatively large pass reduction, so that the ingot is quickly rolled to be near the target thickness, thereby accelerating the deformation process. In a preferred embodiment, in the step S3, the initial rolling temperature of the hot rough rolling is 520-535 °C; and/or the reduction in pass of the hot rough rolling is 20-30 mm; and/or the thickness of the hot rough rolled sheet is 24-28 mm. The above mentioned hot rough rolling process can further improve the element distribution, grain size and distribution thereof of the sheet structure while shortening the preparation time, thereby is more conducive to further reducing the tendency of liquefying cracks in the welded joints during the welding of the aluminum alloys.

Correspondingly, in order to further improve the heat-processing performance and formability of the sheet during the hot rolling process, thereby further enhancing the strength of weld seam and reducing its tendency of liquefying cracks, in a preferred embodiment, in the step S3, the initial rolling temperature of the hot finish rolling is 510-520 °C; and/or the final rolling temperature of the hot finish rolling is 260-270 °C; and/or the reduction in pass of the hot finish rolling is 5-6 mm; and/or the thickness of the hot rolled sheet is 4-8 mm.

In a preferred embodiment, in the step S4, the reduction in pass of the cold rolling is 1-2 mm; and/or the thickness of the cold rolled sheet is 1.0-1.5 mm, which can further improve the welding performance of the aluminum alloy, refine the grain size, enhance the strength of the material itself and the strength of weld seam when the material is used for welding, and further reduce the tendency of liquefying cracks in welded joints.

In another typical embodiment of the present disclosure, a 6XXX aluminum alloy sheet capable of reducing liquefying cracks in weld seams is also provided, which is obtained by the above mentioned preparation method of the present disclosure.

In another typical embodiment of the present disclosure, a welding method for an aluminum alloy is also provided, wherein the above mentioned 6XXX aluminum alloy sheet of the present disclosure is used as a base material and subjected to CMT+P welding with an ER5356 welding wire. Wherein, the parameters of the CNT+P welding process can be obtained by using conventional parameters in the art, and can also be adjusted adaptively according to the actual conditions of material preparation, which can be understood by those skilled in the art and will not be repeated here.

In another typical embodiment of the present disclosure, a welded joint is also provided, which is obtained by the above mentioned welding method of the present disclosure, and the welded joint has no liquefying cracks, thereby greatly improving the strength and reliability of the weld seam.

Typically but non-limiting, the 6XXX aluminum alloy sheet is composed of the following components: 0.4%, 0.45%, 0.5%, 0.55%, 0.6%, 0.65%, 0.7%, 0.75%, 0.8% or a range consisting of any two of the above numerical values of Si; 0.1%, 0.15%, 0.2%, 0.25%, 0.3%, 0.35% or a range consisting of any two of the above numerical values of Fe; 0.08%, 0.09%, 0.1%, 0.12%, 0.14%, 0.15%, 0.16%, 0.18%, 0.2% or a range consisting of any two of the above numerical values of Mn; 0.45%, 0.5%, 0.55%, 0.6%, 0.65%, 0.7%, 0.75%, 0.8%, 0.85%, 0.9% or a range consisting of any two of the above numerical values of Mg; 0%, 0.05%, 0.1%, 0.15%, 0.2%, 0.25%, 0.3%, 0.35%, 0.4% or a range consisting of any two of the above numerical values of Cu; with the total weight percentage of Mn and Cu being 0.08%, 0.1%, 0.12%, 0.15%, 0.18%, 0.2% or a range consisting of any two of the above numerical values; the balance being Al and inevitable impurities, each of the inevitable impurities being <0.05%, and the total impurities being <0.15%.

Typically but non-limiting, in the step S1, the thickness of the ingot casting is 530 mm, 532 mm, 534 mm, 536 mm, 538 mm, 540mm or a range consisting of any two of the above numerical values.

Typically but non-limiting, in the step S2, the heat preservation temperature of the homogenization treatment is 540°C, 542°C, 546°C, 548°C, 550°C, 552°C, 554°C, 556 °C, 558°C, 560°C or a range consisting of any two of the above numerical values; and the heat preservation time is 8 hours, 8.5 hours, 9 hours, 9.5 hours, 10 hours or a range consisting of any two of the above numerical values.

Typically but non-limiting, in the step S3, the initial rolling temperature of the hot rough rolling is 520°C, 522°C, 524°C, 526°C, 528°C, 530°C, 532°C, 535°C or a range consisting of any two of the above numerical values; the reduction in pass is 20 mm, 22 mm, 24 mm, 26 mm, 28 mm, 30 mm or a range consisting of any two of the above numerical values; and the thickness of the hot rough rolled sheet is 24 mm, 25 mm, 26 mm, 27 mm, 28 mm or a range consisting of any two of the above numerical values.

Typically but non-limiting, in the step S3, the initial rolling temperature of the hot finish rolling is 510°C, 512°C, 514°C, 516°C, 518°C, 520°C or a range consisting of any two of the above numerical values; the final rolling temperature is 260°C, 262°C, 264°C, 268°C, 270°C or a range consisting of any two of the above numerical values; the reduction in pass is 5 mm, 5.2 mm, 5.4 mm, 5.6 mm, 5.8 mm, 6 mm or a range consisting of any two of the above numerical values; and the thickness of hot rolled sheet is 4 mm, 5 mm, 6 mm, 7 mm, 8 mm or a range consisting of any two of the above numerical values.

Typically but non-limiting, in the step S4, the reduction in pass of the cold rolling is 1 mm, 1.2 mm, 1.4 mm, 1.6 mm, 1.8 mm, 2 mm or a range consisting of any two of the above numerical values; and the thickness of the cold rolled sheet is 1.0 mm, 1.1 mm, 1.2 mm, 1.3 mm, 1.4 mm, 1.5 mm or a range consisting of any two of the above numerical values.

Typically but non-limiting, in the step S5, the temperature of the solution treatment is 550°C, 551°C, 552°C, 553°C, 554°C, 555°C, 556°C, 557°C, 558°C, 559°C, 560°C or a range consisting of any two of the above numerical values; and the heat preservation time is 20 seconds, 21 seconds, 22 seconds, 23 seconds, 24 seconds, 25 seconds, 26 seconds, 27 seconds, 28 seconds, 29 seconds, 30 seconds or a range consisting of any two of the above numerical values.

Typically but non-limiting, in the step S6, the temperature of the aging treatment is 60°C, 61°C, 62°C, 63°C, 64°C, 65°C, 66°C, 67°C, 68°C, 69°C, 70°C or a range consisting of any two of the above numerical values; and the heat preservation time is 20 hours, 21 hours, 22 hours, 23 hours, 24 hours, 25 hours, 26 hours, 27 hours, 28 hours or a range consisting of any two of the above numerical values.

This application is further described in detail below in combination with specific embodiments, and the embodiments shall not be construed as limitations of the protection scope as required by this application.

### Example 1

The alloy components of the 6XXX aluminum alloy sheet in Example 1 are shown in Table 1.

Step S1, the raw materials of 6XXX aluminum alloy sheet according to Table 1 were melted and casted at 720°C, to obtain an ingot casting with a thickness of 535 mm.

Step S2, the ingot casting was subjected to heat preservation at 550°C for 9 hours for homogenization treatment, to obtain a homogenized ingot casting.

Step S3, the homogenized ingot casting was subjected to hot rough rolling, with an initial rolling temperature of 525°C and a reduction in pass of 25 mm, resulting in a hot rough rolled sheet with a thickness of 26 mm; then, the hot rough rolled sheet was subjected to hot finish rolling, with an initial rolling temperature of 515°C, a final rolling temperature of 265°C and a reduction in pass of 5.5 mm, to obtain a hot rolled sheet with a thickness of 6 mm.

Step S4, the hot rolled sheet was subjected to cold rolling with a reduction in pass of 1.5 mm, to obtain a cold rolled sheet with a thickness of 1.5 mm.

Step S5, the cold rolled sheet was subjected to heat preservation at 555°C for 25 seconds, then cooled to room temperature for solution treatment, to obtain a solutionized sheet.

Step S6, the solutionized sheet was subjected to heat preservation at 66°C for 24 hours for aging treatment, to obtain a 6XXX aluminum alloy sheet.

Step S7, the prepared 6XXX aluminum alloy sheet was used as base material, and subjected to CMT+P welding with ER5356 welding wire, the welding parameters were as follows: wire feeding speed of 4.4 m/min, welding speed of 72 cm/min, protective gas of 99.99% argon, and flow rate of protective gas of 12 L/min.

### Example 2

The alloy components of the 6XXX aluminum alloy sheet in Example 2 are shown in Table 1.

Step S1, the raw materials of 6XXX aluminum alloy sheet according to Table 1 were melted and casted at 720°C, to obtain an ingot casting with a thickness of 535 mm.

Step S2, the ingot casting was subjected to heat preservation at 555°C for 9.5 hours for homogenization treatment, to obtain a homogenized ingot casting.

Step S3, the homogenized ingot casting was subjected to hot rough rolling, with an initial rolling temperature of 530°C and a reduction in pass of 25 mm, resulting in a hot rough rolled sheet with a thickness of 26 mm; then, the hot rough rolled sheet was subjected to hot finish rolling, with an initial rolling temperature of 513°C, a final rolling temperature of 263°C and a reduction in pass of 5.5 mm, to obtain a hot rolled sheet with a thickness of 6 mm.

Step S4, the hot rolled sheet was subjected to cold rolling with a reduction in pass of 1.5 mm, to obtain a cold rolled sheet with a thickness of 1.5 mm.

Step S5, the cold rolled sheet was subjected to heat preservation at 558°C for 25 seconds, then cooled to room temperature for solution treatment, to obtain a solutionized sheet.

Step S6, the solutionized sheet was subjected to heat preservation at 65°C for 24 hours for aging treatment, to obtain a 6XXX aluminum alloy sheet.

Step S7, the prepared 6XXX aluminum alloy sheet was used as base material, and subjected to CMT+P welding with ER5356 welding wire, the welding parameters were as follows: wire feeding speed of 4.4 m/min, welding speed of 72 cm/min, protective gas of 99.99% argon, and flow rate of protective gas of 12 L/min.

### Examples 3 to 6

The difference between Examples 3 to 6 and Example 1 lied in that the alloy components of the 6XXX aluminum alloy sheet were different, see Table 1 for details.

### Example 7

The difference between Example 7 and Example 1 lied in that in the step S2, the heat preservation temperature of the homogenization treatment was 540°C, and the heat preservation time was 10 hours.

### Example 8

The difference between Example 8 and Example 1 lied in that in the step S2, the heat preservation temperature of the homogenization treatment was 560°C, and the heat preservation time was 8 hours.

### Example 9

The difference between Example 9 and Example 1 lied in that in the step S3, the initial rolling temperature of the hot rough rolling was 520°C, the reduction in pass was 20 mm, and the thickness of the hot rough rolled sheet was 28 mm; the initial rolling temperature of the hot finish rolling was 510°C, the final rolling temperature was 260°C, the reduction in pass was 5 mm, and the thickness of the hot rolled sheet was 8 mm. In the step S4, the reduction in pass of the cold rolling was 1 mm.

### Example 10

The difference between Example 10 and Example 1 lied in that in the step S3, the initial rolling temperature of the hot rough rolling was 535°C, the reduction in pass was 30 mm, and the thickness of the hot rough rolled sheet was 24 mm; the initial rolling temperature of the hot finish rolling was 520°C, the final rolling temperature was 270°C, the reduction in pass was 6 mm, and the thickness of the hot rolled sheet was 4 mm. In the step S4, the reduction in pass of the cold rolling was 2 mm.

### Example 11

The difference between Example 11 and Example 1 lied in that in the step S5, the temperature of the solution treatment was 550°C, and the heat preservation time was 30 seconds.

### Example 12

The difference between Example 12 and Example 1 lied in that in the step S5, the temperature of the solution treatment was 560°C, and the heat preservation time was 20 seconds.

### Example 13

The difference between Example 13 and Example 1 lied in that in the step S6, the temperature of the aging treatment was 60°C, and the heat preservation time was 28 hours.

### Example 14

The difference between Example 14 and Example 1 lied in that in the step S6, the temperature of the aging treatment was 70°C, and the heat preservation time was 20 hours.

### Comparative example 1

The difference between Comparative example 1 and Example 1 lied in that in the step S5, the temperature of the solution treatment was 500°C, and the heat preservation time was 10 seconds.

### Comparative example 2

The difference between Comparative example 2 and Example 1 lied in that the alloy components of the 6XXX aluminum alloy sheet were different, see Table 1 for details.

### Comparative example 3

The difference between Comparative example 3 and Example 1 lied in that the alloy components of the 6XXX aluminum alloy sheet were different, see Table 1 for details. In the step S5, the temperature of the solution treatment was 600 °C, and the heat preservation time was 60 seconds.

### Material testing:

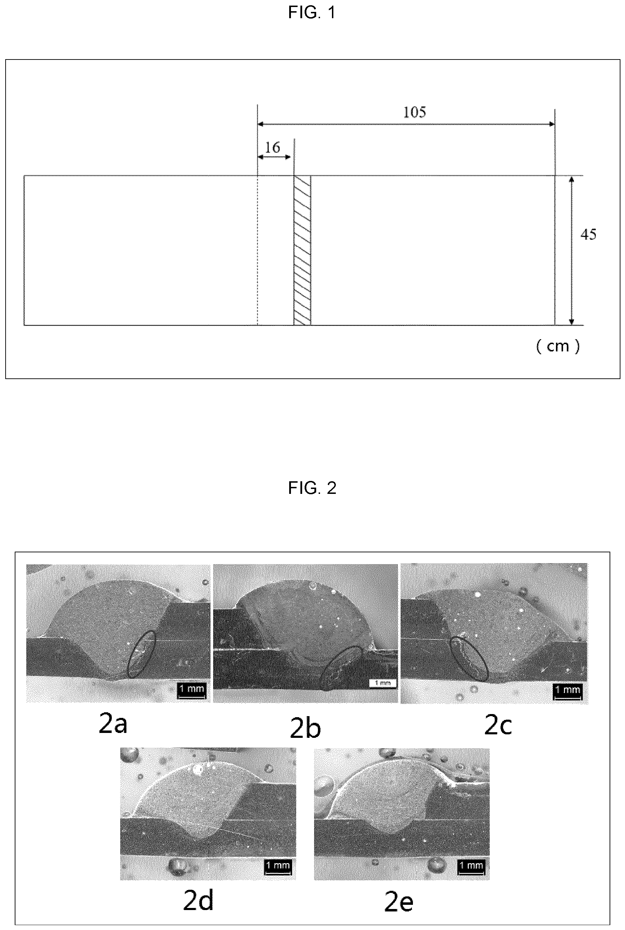

Referring to GB/T 3246.1-2012 "Inspection method for structure of wrought aluminum and aluminum alloy products", the structure of the welded joints in the above examples and comparative examples was observed and the components of the same were analyzed, the welded samples were tested for tensile properties, and the tensile specimen size is shown in FIG. 1; the load-displacement of the weld seam was measured, the results are as shown in Table 1.

The macroscopic morphology diagram of the weld seams of Comparative examples 1 to 3 and Examples 1 to 2 is shown in FIG. 2. Panel 2a in FIG. 2 shows the macroscopic morphology diagram of the weld seams of Comparative example 1, Panel 2b in FIG. 2 shows the macroscopic morphology diagram of the weld seams of Comparative example 2, Panel 2c in FIG. 2 shows the macroscopic morphology diagram of the weld seams of Comparative example 3, Panel 2d in FIG. 2 shows the macroscopic morphology diagram of the weld seams of Example 1, and Panel 2e in FIG. 2 shows the macroscopic morphology diagram of the weld seams of Example 2. From FIG. 2, it can be seen that there were obvious liquefying cracks in the partial melting zone of the weld seams (the circled part near the fusion line) for the Comparative examples, while no liquefying cracks were found in the corresponding positions in the Examples.

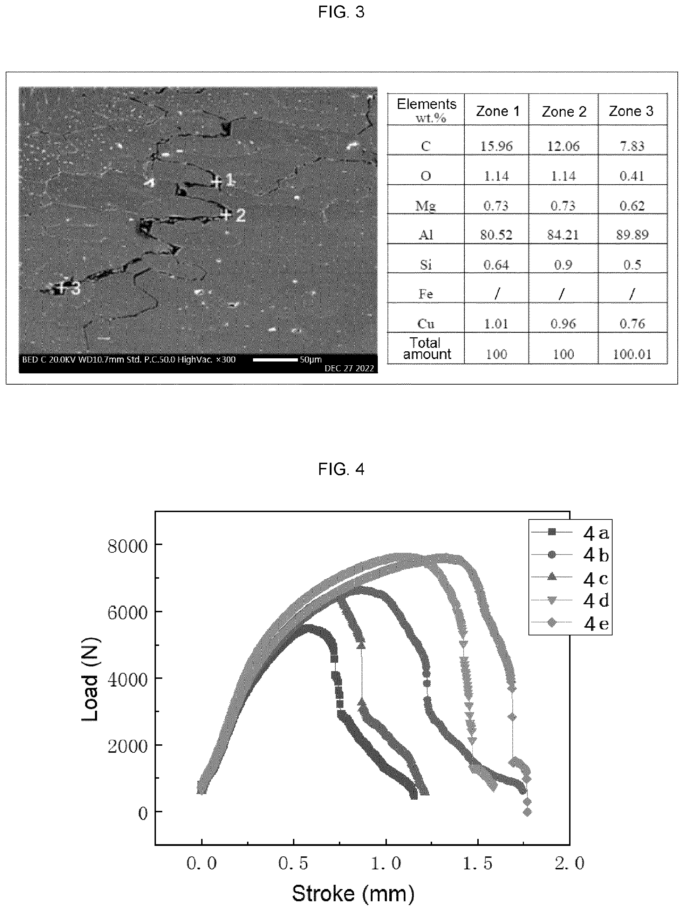

The microstructure diagram and component analysis diagram of the partial melting zone of the weld seams of Comparative example 1 are shown in FIG. 3. From FIG. 3, it can be seen that the liquefying cracks in the partial melting zone of the weld seams in Comparative examples were distributed and expanded along grain boundaries, and the grains in the area where liquefying cracks occurred were relatively coarse, and the precipitated phase distributed between grain boundaries was mainly MgSi(MgSiCu) eutectic phase. During the welding process, the materials were subjected to uneven thermal cycling, resulting in residual stress distribution. The coarse grain structure in the partial melting zone and the eutectic phase distributed between grain boundaries become the weakest area of the entire joint, leading to the occurrence of liquefying cracks in the welded joint.

The load-displacement graph of the weld seams of Comparative examples 1 to 3 and Examples 1 to 2 is shown in FIG. 4. Panel 4a in FIG. 4 shows the load-displacement graph of the weld seams of Comparative example 1, Panel 4b in FIG. 4 shows the load-displacement graph of the weld seams of Comparative example 2, Panel 4c in FIG. 4 shows the load-displacement graph of the weld seams of Comparative example 3, Panel 4d in FIG. 4 shows the load-displacement graph of the weld seams of Example 1, and Panel 4e in FIG. 4 shows the load-displacement graph of the weld seams of Example 2. From FIG. 4, it can be seen that the breaking load of the joints in the Examples was generally higher than that in the Comparative examples, indicating that the elimination of liquefying cracks helps to improve the mechanical properties of the joints.

**Table 1**

| Contents of elements (wt. %) | Si | Fe | Mn | Mg | Cu | Impurity elements | | | | Al | Breakin g load (N) |
|---|---|---|---|---|---|---|---|---|---|---|---|
| | | | | | | Cr | Ni | Ti | Zr | | |
| Example 1 | 0.7 5 | 0.1 4 | 0.13 | 0.66 | 0.08 | 0.015 | 0.006 | 0.016 | 0.001 | Balance | 7667 |
| Example 2 | 0.7 6 | 0.1 5 | 0.11 | 0.65 | 0.08 | 0.014 | 0.004 | 0.018 | 0.002 | Balance | 7599 |
| Example 3 | 0.4 | 0.1 | 0.08 | 0.45 | 0.08 | 0.015 | 0.006 | 0.019 | 0.002 | Balance | 7517 |
| Example 4 | 0.7 | 0.1 | 0.08 | 0.6 | 0.08 | 0.015 | 0.006 | 0.018 | 0.002 | Balance | 7521 |
| Example 5 | 0.8 | 0.2 | 0.15 | 0.7 | 0.08 | 0.015 | 0.006 | 0.018 | 0.002 | Balance | 7559 |
| Example 6 | 0.8 | 0.3 5 | 0.2 | 0.9 | 0.08 | 0.015 | 0.006 | 0.018 | 0.002 | Balance | 7512 |
| Example 7 | See Example 1 | | | | | | | | | | 7455 |
| Example 8 | See Example 1 | | | | | | | | | | 7450 |
| Example 9 | See Example 1 | | | | | | | | | | 7429 |
| Example 10 | See Example 1 | | | | | | | | | | 7420 |
| Example 11 | See Example 1 | | | | | | | | | | 7508 |
| Example 12 | See Example 1 | | | | | | | | | | 7510 |
| Example 13 | See Example 1 | | | | | | | | | | 7502 |
| Example 14 | See Example 1 | | | | | | | | | | 7488 |
| Comparative example 1 | See Example 1 | | | | | | | | | | 5465 |
| Comparative example 2 | 0.3 | 0.0 5 | 0.05 | 1.0 | 0.5 | 0.014 | 0.004 | 0.018 | 0.002 | Balance | 6629 |
| Comparative example 3 | 1.0 | 0.4 | 0.3 | 0.4 | 0.5 | 0.014 | 0.004 | 0.018 | 0.002 | Balance | 6355 |

It can be seen from the above that compared with the Comparative examples, the examples of the present disclosure only use several simple additive element, and by controlling a specific proportion of aluminum alloy elements, especially by controlling the total weight of Mn and Cu within a lower range, the 6XXX aluminum alloy sheet is improved in the direction of reducing liquefying cracks in weld seams. At the same time, by combining with a specific "solution-aging" treatment process, the eutectic phase of aluminum alloy can be completely redissolved in the sheet, while eliminating the lath-shaped grain structure grown during the rolling of the original sheet, thereby effectively inhibiting the precipitation of the low melting point MgSi(MgSiCu) eutectic phase, etc., between grain boundaries, when used for welding, the tendency of liquefying cracks generated in the joint partial melting zone under the input of welding heat can be greatly reduced. The 6XXX aluminum alloy sheet of the present disclosure contains no rare noble metals, has a relatively low cost and a simple preparation method, and can be processed and produced on conventional production lines. The produced 6XXX aluminum alloy sheet has good weldability, which can effectively reduce liquefying cracks in the overlap joint of the weld seams, improve the strength of weld seam, and enhance the mechanical properties of joints. In addition, it can be seen that when all process parameters are within the preferred range of the present disclosure, the comprehensive performance of the material is better.

The descriptions above are merely preferred embodiments of the present disclosure and are not intended to limit the present disclosure, and various modifications and alterations of the present disclosure may be made by persons skilled in the art. Any modifications, equivalent substitutions, improvements and the like made within the spirit and principles of the present disclosure shall be included in the protection scope of the present disclosure.

## Claims

1. A preparation method of a 6XXX aluminum alloy sheet capable of reducing liquefying cracks in weld seams, wherein, the aluminum alloy sheet is composed of the following components in terms of weight percentage: 0.4-0.8% of Si, 0.1-0.35% of Fe, 0.08-0.2% of Mn, 0.45-0.9% of Mg, and ≤ 0.2% of Cu, with the total weight percentage of Mn and Cu being ≤ 0.2%, and the balance being Al and inevitable impurities, each of the inevitable impurities being <0.05%, and the total impurities being <0.15%, and the preparation method comprises the following steps:
step S1, subjecting raw materials of the 6XXX aluminum alloy sheet to melting and casting, to obtain an ingot casting;
step S2, subjecting the ingot casting to homogenization treatment, to obtain a homogenized ingot casting;
step S3, subjecting the homogenized ingot casting to hot rough rolling so as to obtain a hot rough rolled sheet, and then subjecting the hot rough rolled sheet to hot finish rolling so as to obtain a hot rolled sheet;
step S4, subjecting the hot rolled sheet to cold rolling, to obtain a cold rolled sheet;
step S5, carrying out heat preservation on the cold rolled sheet at 550-560 °C for 20-30 seconds for the solution treatment, to obtain a solutionized sheet; and
step S6, carrying out heat preservation on the solutionized sheet at 60-70 °C for 20-28 hours for the aging treatment, to obtain the 6XXX aluminum alloy sheet.

2. The preparation method according to claim 1, wherein, the aluminum alloy is composed of the following components in terms of weight percentage: 0.7-0.8% of Si, 0.1-0.2% of Fe, 0.08-0.15% of Mn, 0.6-0.7% of Mg, and ≤ 0.1% of Cu, with the total weight percentage of Mn and Cu being ≤ 0.2%, and the balance being Al and inevitable impurities, each of the inevitable impurities being <0.05%, and the total impurities being <0.15%.

3. The preparation method according to claim 1 or 2, wherein, in the step S1, the thickness of the ingot casting is 530 mm to 540 mm.

4. The preparation method according to claim 1 or 2, wherein, in the step S2, the heat preservation temperature of the homogenization treatment is 540-560 °C, and the heat preservation time is 8-10 hours.

5. The preparation method according to claim 1 or 2, wherein, in the step S3, the initial rolling temperature of the hot rough rolling is 520-535 °C; and/or the reduction in pass of the hot rough rolling is 20-30 mm; and/or the thickness of the hot rough rolled sheet is 24-28 mm.

6. The preparation method according to claim 1 or 2, wherein, in the step S3, the initial rolling temperature of the hot finish rolling is 510-520 °C; and/or the final rolling temperature of the hot finish rolling is 260-270°C; and/or the reduction in pass of the hot finish rolling is 5-6 mm; and/or the thickness of the hot rolled sheet is 4-8 mm.

7. The preparation method according to claim 1 or 2, wherein, in the step S4, the reduction in pass of the cold rolling is 1-2 mm; and/or the thickness of the cold rolled sheet is 1.0-1.5 mm.

8. A 6XXX aluminum alloy sheet capable of reducing liquefying cracks in weld seams, wherein, the 6XXX aluminum alloy sheet is obtained by the preparation method according to any one of claims 1 to 7.

9. A welding method for an aluminum alloy, wherein, the 6XXX aluminum alloy sheet according to claim 8 is used as a base material and subjected to CMT+P welding with an ER5356 welding wire.

10. A welded joint, wherein, the welded joint is obtained by the welding method according to claim 9, and the welded joint has no liquefying cracks.
